# EUROPEAN PATENT SPECIFICATION

(11) **EP 3 486 259 B1**
(45) Date of publication and mention of the grant of the patent: **06.01.2021**
(21) Application number: 18162030.3
(22) Date of filing: 15.03.2018
(51) Int. Cl.: C08B 37/00

(54) **METHOD OF PREPARING SEAWEED EXTRACT FROM EUCHEUMA SEAWEED, ITS UTILIZATION IN PROCESSED MEATS AND A METHOD IN MAKING MEAT GELS TO SEAWEED EXTRACT FUNCTIONALITY**
VERFAHREN ZUR HERSTELLUNG VON ALGENEXTRAKT AUS EUCHEUMA-ALGEN, VERWENDUNG DAVON IN VERARBEITETEM FLEISCH UND VERFAHREN BEI DER HERSTELLUNG VON FLEISCHGELEN FÜR MEERESALGENEXTRAKTFUNKTIONALITÄT
PROCÉDÉ DE PRÉPARATION D'UN EXTRAIT D'ALGUES MARINES À PARTIR D'ALGUES EUCHEUMA, SON UTILISATION DANS LES VIANDES TRANSFORMÉES ET PROCÉDÉ DE FABRICATION DE GELS DE VIANDE À FONCTIONNALITÉ D'EXTRAITS D'ALGUES MARINES

(30) Priority: 20.11.2017 US 201715817764
(43) Date of publication of application: 22.05.2019
(73) Proprietor: Gum Products International Inc., Newmarket, ON L3Y 8T7 (CA)
(72) Inventor: LARA, Arvin, Keswick, Ontario L4P0C2 (CA); LIU, Henry, RICHMOND HILL, Ontario L3Y 8T7 (CA)
(74) Representative: Lavoix

(56) References cited:
- US-A- 3 094 517
- US-A1- 2008 317 791
- A. TRIUS ET AL: "Carrageenans and their use in meat products", CRITICAL REVIEWS IN FOOD SCIENCE AND NUTRITION, vol. 36, no. 1-2, 1 January 1996 (1996-01-01), pages 69-85, XP55508033, USA ISSN: 1040-8398, DOI: 10.1080/10408399609527719

## Description

### Background of the Invention

The invention relates to preparation of seaweed extract fiber (SEF) from Eucheuma Seaweeds. The invention also relates to using SEF as binder in extended restructured hams.

Red Algae of the Eucheuma specie has been widely used for the commercial production of hydrocolloids or commonly known as Processed Eucheuma Seaweed (PES) which is derived from the alkali treatment of the Eucheuma Seaweed. It is extensively used in many food preparations today such as in processed meats. The predominance of Eucheuma type seaweed Cottonii and Spinosum in the production of PES over other Red Algae Species has been mainly attributed to its successful cultivation due to ease in reproduction and the rapid growth of its fingerlings in temperate waters whereby harvesting is possible all year round. Eucheuma seaweed farming and production has grown tremendously over the years wherein Indonesia has seen the biggest growth after many years of widespread growth in the Philippines. This growth was fueled by the increasing demand of PES use in food, especially in processed meats and dairy based products worldwide.

PES is also widely known as semi-refined carrageenan (SRC), alternatively refined carrageenan (ARC) Philippine Natural Grade (PNG) and Alkali Treated Cotonii or Spinosum Powder. The commercial production of PES is typically done by soaking the seaweed with alkali for few hours at elevated temperatures. This process allow the native polysaccharide component of the seaweed plant to transform into a different morphology, making it more effective in binding and stabilizing aqueous solutions and any protein based systems such as meat, milk and their derivatives. The conformational changes of the polysaccharide component of the Eucheum Seaweed however, are not limited to alkali treatment. In fact, transformation happens naturally as the seaweed ages, although at a much slower pace. However, practically, most weeds may not attain full maturity when the seaweed is harvested due to pressure for the farmers to sell. This is why the need for alkali treatment is necessary to enhance the functionality for the finished hydrocolloid extract or PES.

The food industry currently is undergoing a major overhaul towards the utilization of natural or minimally processed additives or ingredients. This new trend has motivated the food industry to seek new ingredients that are sourced naturally or minimally processed to satisfy the current trend. The appetite for label friendly food additives has become so big that most meat processors, particularly, have joined the initiative eliminating the chemically sounding, artificial or synthetic and highly processed ingredients in the formula.

Hydrocolloids produced from alkali treatment of Eucheuma seaweed or PES has become the preferred binder in processed meats due to its relatively lower cost compared to other binders but then again, being chemically treated, it is heading towards exclusion. A method in producing a natural seaweed powder without alkali treatment is needed. Improved methods of restructuring ham and preparing meat gel chubs are also needed.

### Summary of Invention

The present invention addresses this need and comprises a method of processing Eucheuma Seaweed in the absence of alkali treatment resulting into a product called Seaweed Powder or Seaweed Extract.

The processing method comprises: (a) washing or rinsing dried Eucheuma seaweed with water; and then (b) soaking the Eucheuma seaweed with dilute salt solution.

The embodiments comprise: A method of preparing seaweed extract from Eucheuma seaweed comprising: (a) washing or rinsing dried Eucheuma seaweed with water; and then (b) soaking the Eucheuma seaweed with dilute alkaline-free potassium chloride salt solution at a concentration from 0.1 to 20 wt.% at 15°C to 30°C for 1 to 3 hours; (c) chopping the soaked Eucheuma seaweed to reduce the size; (d) sterilizing and deodorizing the resultant chopped Eucheuma seaweed for 30 to 45 minutes with a solution of sodium hypochlorite or hydrogen peroxide at a concentration of 50 to 300 ppm; (e) washing the sterilized and deodorized Eucheuma seaweed with water, and recycling the wash water from step (e) for use in washing in step (a); (f) drying the resultant washed Eucheuma seaweed using a mechanical dryer; (g) grinding the resultant dried Eucheuma seaweed into an alkali-free powder; (h) packaging the resultant alkali-free powder into bags.

In some embodiments the invention includes a step of recycling the water used in step (e) into step (a).

Preferably step (d) is carried out for 30 to 45 minutes with a solution of sodium hypochlorite or hydrogen peroxide at a concentration of 50 to 300 ppm.

The chopping step (c) may be carried out with a high speed mechanical chopper or cutter and the reduced size is 2 to 4 cm in some embodiments.

The preferred Eucheuma seaweed is Eucheuma *Cottonii* or Eucheuma *Spinosum.*

In some embodiments dilute salt solution in step (b) is an aqueous solution of potassium chloride salt at a concentration of 1% to 10% by weight.

Preferably the rinsing or washing step (a) is carried out in 20 to 30 minutes.

In some embodiments soaking step (b) is carried out at 15°C to 30°C for 1 to 3 hours.

In preferred embodiments the Eucheuma seaweed is dried to 12 to 15% moisture in step (f). The alkali-free powder of step (g) has, in some embodiments, a moisture of 10% to 12%.

Another aspect of this invention is the utilization of the seaweed extract into processed meat. For example ham can be restructered with the alkali-free seaweed extract powder of step (g) by a method comprising:
i. commuting portions of pork leg meat using a kidney plate and 3mm plate;
ii. mixing a solution of alkali-free seaweed extract powder prepared according to claim 2 at a concentration of 0.50 to 1.0% in the solution with the resultant commuted portions of pork leg meat;
iii. mixing the resultant commuted meats with brine;
iv. vacuum tumbling the resultant mixture for 2 to 3 hours;
v. thereafter stuffing the resultant meats into plastic casings with 100 to 120mm stuffing diameter.
vi. cooking the stuffed meats in a steam oven at 80°c to 85°C to an internal temperature of 70°C to 72°C;
vii. cooling the cooked stuffed meats using cold tap running water; and
viii. storing the cooled cooked stuffed meats in a chiller to set overnight.

The seaweed extract is added into a 50% extended restructured ham and the performance is evaluated such as texture enhancement using an SMS Texture Analyzer and measurement of cold storage syneresis.

Another aspect of this invention is a method in which the finished seaweed extract is screened or evaluated in terms of protein reactivity. This aspect of the invention comprises
A. grinding meat;
B. mixing alkali-free seaweed extract powder with one or more dry ingredients selected from the group consisting of STPP, NaCl, nitrite, erythorbate, dextrose, and seasoning, and dispersing into water to prepare brine;
C. combining the ground meat and the brine in a dough mixer to form a meat slurry;
D. stuffing the meat slurry into fibrous casings to form meat gel chubs;
E. weighing the meat gel chubs before cooking;
F. cook the meat gel chubs in steam oven;
G. cooling the meat gel chubs with running water or shower;
H. reweighing the meat gel chubs to calculate cook yield;
I. storing the meat gel chubs in a chiller to set overnight; and
J. slicing the meat gel chubs and measuring puncture and compression hardness.

The seaweed extract is subjected into a meat batter system similar to making restructured meats except that the meat is comminuted or emulsified into a fine size in order to facilitate fast protein extraction and interaction with the seaweed extract binder as opposed to slow and long tumbling hours in making conventional restructured hams.

In some embodiments this aspect of the invention comprises pre-blending the Seaweed Extract with the dry ingredients before dispersing the resultant blend into water to prepare the brine. The brine may be mixed with a mechanical mixer for about 5 minutes, for example.

In one particular embodiment the meat and brine are mixed using a dough mixer equipped with a diamond shape paddle carried out for 10 to 15 minutes at medium speed, wherein the meat slurry is stuffed into fibrous casings with 60 to 80mm stuffing diameter.

The chubs are preferably cooked at 80 to 85°C to an internal temperature of 70 to 72°C.

Hardness may be measured using an SMS texture analyzer.

### Brief Description of the Drawings

In order to understand the disclosure and see how it may be carried out in practice, embodiments will be described by way of non-limiting examples, with reference to the accompanying drawings in which:
Fig. 1 is a graphical representation of comparative puncture hardness.
Fig. 2 is a set of two ham photos made from blank (no binder) and seaweed extract.
Fig. 3 is a graphical measurement of syneresis in a 7-day period.
Fig. 4 is a graphical representation of puncture hardness of meat gels using 1 cm² cylindrical probe at 50% extension versus a blank.
Fig. 5 is is a graphical representation of puncture hardness of meat gels using 1 cm² cylindrical probe at 70% extension versus a blank.
Fig. 6 is a graphical representation compression hardness of meat gels at 50% Extension.
Fig. 7 is is a graphical representation compression hardness of meat gels at 70% extension.
Fig, 8 is graphical representation cook yields of meat gels with sef vs. blank at 50% extension.
Fig. 9 is is graphical representation cook yields of meat gels with sef vs. blank at 70% extension.
Fig. 10 is a set of photos of sliced meat gels with blank (left) and SEF (right).

### Detailed Description of the Invention

The present invention relates to an extract or powder product derived from the processing of Eucheuma Seaweeds. Two widely cultivated seaweeds, Eucheuma Cottonii and Spinosum, are the preferred raw materials for the production of seaweed extract due to their availability and price sustainability. The seaweed is harvested and sun dried by the farmers and sold with moisture levels at about 30% to 40%, although 35% is the market requirement where the price per kilogram of seaweed is set at.

The first step of the process involves washing or pre-rinsing the dried seaweed to remove impurities which are mostly sand and salts that were crystallized previously during sun drying. The wash water can be tap water or recycled wash water from the previous washings of the already clean seaweed in step (5). The washing takes about 10 minutes to 60 minutes, preferably 20 to 45 minutes most preferably 20 to 30 minutes at ambient temperatures preferably 10 to 30°C. After this stage, the seaweed would have hydrated to some degree and should be free from impurities. Washing is carried out via forced agitation with paddles/agitators in a pre-filled tank. Rinsing is carried out with overhead rinse nozzles.

The next step involves soaking the hydrated seaweed with a very dilute salt solution containing 0.1% to 20% potassium chloride, preferably 0.1 to 10%, most preferably 1 to 5%, in ambient temperature, preferably 15 to 30 °C. This process allows full hydration of the seaweed in the presence of potassium ions. Further hydration at this stage allows both absorption and adsorption of the dissociated potassium ions into the cellular matrix and the outer surface of the plant material which is vital for the increased stability and functionality of the polysaccharide component of the seaweed in the subsequent process steps and later on as finished product. The soaking process takes about 1 to 20 hours, preferably 2 to 10 hours, most preferably 1 to 5 hours.

The next step is chopping the seaweed to smaller size, from about 2 to 10 cm, preferably 2 to 6 cm, most preferably 2 to 4 cm. The main purpose of this step is to allow for a more efficient handling of the material for further size reduction into a powder.

After chopping, the seaweed is sterilized or deodorized with a very dilute oxidizing agent containing 10 to 300 ppm preferably 50 to 200 ppm hypochlorite or peroxide solution. The sterilizing and deodorizing process are done at ambient temperature preferably at 10 to 30°C most preferably at 15 to 20°C for 10 to 60 minutes, preferably 20 to 50 minutes, most preferably 25 to 45 minutes.

The chopped seaweed is then subjected for final wash using a clean tap water for 10 to 20 minutes. The purposes of this step are to eliminate any residues from the dilute oxidizing agent used in disinfecting and deodorizing the seaweed.

The clean seaweed is then dried through a mechanical dryer from about 85% to 90% moisture down to 15%, preferably to 12 to 15%, final moisture. The dryer temperature should not exceed 105°C
The dried seaweed chip is then converted into powder using a mechanical grinder 50 to 150 microns, preferably 50 to 100 microns, and most preferably 50 to 70 microns. The grinding process will generate some heat, driving out more moisture from the chips as it being grinded. The final moisture of the powder coming out of the grinder will be about 7 to 12%, preferably 9 to 12%, most preferably 10% to 12% moisture.

The powder is then packed into plastic lined paper bags and kept a cool dry place.

Below, in Tables 1 and 2, is a conventional formula to prepare a 50% extended restructured ham.

**Table 1 - Ham Formula with Seaweed Extract**

| Compositon | % In Brine | % In Fin |
|---|---|---|
| Pork Legs Ground, Kidney Plate | | 60.00% |
| Ground Pork, 3mm Plate | | 6.67% |
| Sodium Tripolyphosphate | 1.20% | 0.40% |
| Sodium Chloride | 5.40% | 1.80% |
| Sodium Nitrite | 0.05% | 0.015% |
| Sodium Erythorbate | 0.09% | 0.03% |
| Dextrose | 4.50% | 1.50% |
| Seaweed Extract | 1.50% | 0.50% |
| Ham Seasoning | 1.50% | 0.50% |
| Ice | 30.00% | 10.00% |
| Water | 55.77% | 18.59% |
| Total | 100.00% | 100.00% |

**Table 2 - Ham Formula No Binder (Blank)**

| Composition | % In Brine | % In Fin |
|---|---|---|
| Pork Legs Ground, Kidney Plate | | 60.00% |
| Ground Pork, 3mm Plate | | 6.67% |
| STPP | 1.20% | 0.40% |
| NaCl | 5.40% | 1.80% |
| Nitrite | 0.05% | 0.015% |
| Erythorbate | 0.09% | 0.03% |
| Dextrose | 4.50% | 1.50% |
| Seasoning | 1.50% | 0.50% |
| Ice | 30.00% | 10.00% |
| Water | 57.27% | 19.09% |
| Total | 100.00% | 100.00% |

Table 1 shows the seaweed extract being used at 0.50% in the formula which corresponds to 1.50% in the brine while Table 2 shows the blank formula of a ham without a binder. The brines are prepared by mixing all the liquid and dry ingredients using a mechanical mixer while the pork leg meats were comminuted to its desired size. The meat and brine are added together into the tumbler and the whole mixture is vacuum tumbled for 2 to 5 hours, preferably 2 to 3 hours, to extract the proteins and allow the functional ingredients such as phosphate, salt and seaweed powder to interact. The meat slurry is then stuffed into an impermeable plastic casing with about 100cm to 150cm, preferably 100 to 120cm, stuffing diameter. The chubs are then cooked in steam oven at 80°C to 95°C, preferably 85°C to 90°C, to an internal temperature of 68°C to 75°C, preferably 70°C to 72°C. The cooked chubs are then cooled down using cold running water and then stored inside a chiller overnight at 0°C to 4°C to allow the meat to set.

The finished hams are then evaluated the next day for hardness and appearance and sliced into 1 mm thickness for measuring storage syneresis in a 7 day period.

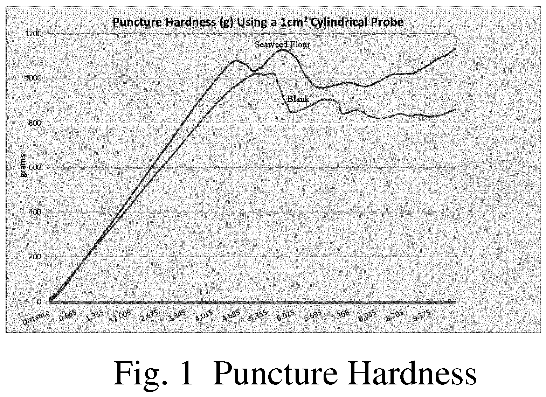

Fig. 1 is a chart which shows the relative strength between the trials Blank (no Binder) and with SEF in a 50% extended restructured ham. This demonstrates the binding capability of the Seaweed Extract in enhancing the hardness of the finished ham. The puncture hardness in Fig. 1 is relative to the ability of the meat block to withstand rupture when a force is applied which is similar to biting or slicing. This is helpful in determining the sliceability of the ham. In the industrial production of sliced hams, the meat block goes into a very rapid slicing process where the thin slices, usually 1cm to 2cm, of hams need to stay intact without breaking or tearing. So in this case, the ham with Seaweed Extract has better puncture resistance or sliceability than the blank.

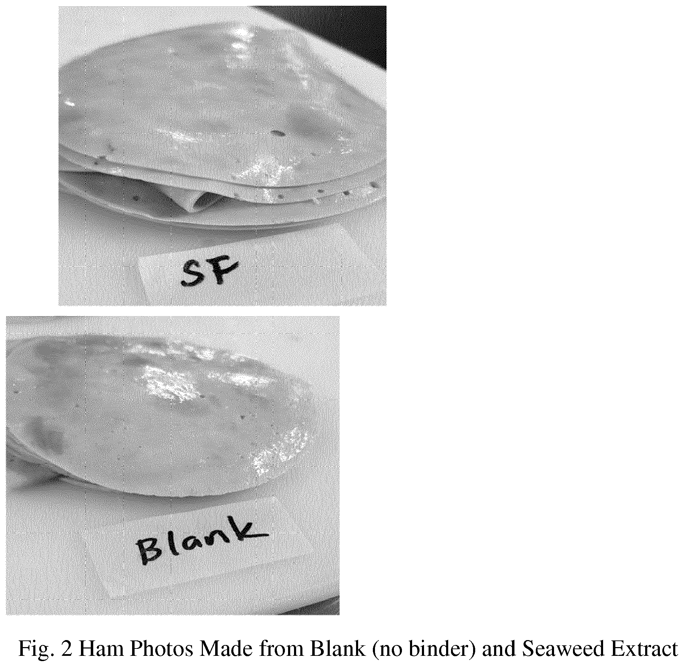

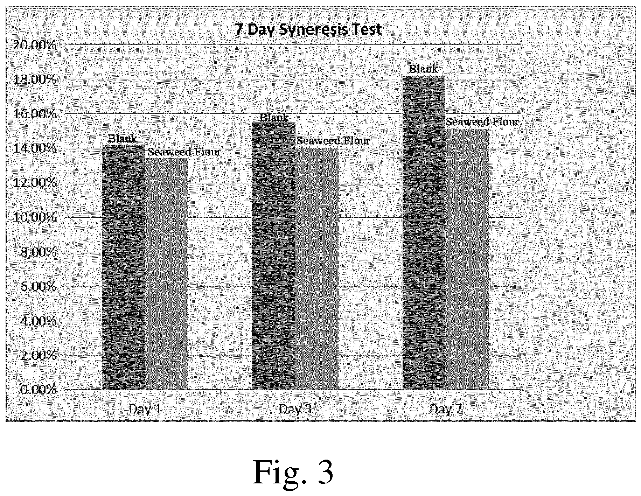

Fig 2 shows the ham slices made from Blank (no binder) and with SEF. It can be observed that slices made from SEF have dryer surfaces than the Blank slices. This observation is supported by the measurement of syneresis in a 7-day period in Fig. 3.

Syneresis is defined as the extraction or expulsion of a liquid, in this case water, from a gel. This terminology is widely used in cheese, yogurts, and any solid or semi-solid systems that contains considerable amount of moisture. In meat systems, purge is more widely used than syneresis although they are referring to the same entity.

Another aspect of the invention is the methodology of determining the protein reactivity of the finished SEF. This methodology is used to monitor the functionality of every batch of the SEF produced. This screening process is critical for the establishment of the SEF's standard of quality to be later on used as a determining factor for its use in processed meats. This testing methodology generates "meat gels."

Table 3 reports the results of an experiment at two extension levels, 50% and 70%. These two extensions are widely used in the commercial preparation of hams and other deli meats. This experiment aids in establishing the ideal extension level for future meat gel testing. Also included in this test is a blank (Table 4) which is the same formula as in Table 3 except that there is no binder or SEF. This will help establish the threshold to demonstrate the performance of the SEF in enhancing texture and stability of the meat gels.

**Table 3 - Formula used in the preparation of the meat gels**

| Composition | 50% Extension | | 70% Extension | |
|---|---|---|---|---|
| | % In Brine | % In Fin | % In Brine | % In Fin |
| Pork Legs, 3mm ground | | 66.67% | | 58.82% |
| STPP (Na tripolyphosphate) | 0.97% | 0.40% | 0.97% | 0.40% |
| NaCl | 4.37% | 1.80% | 4.37% | 1.80% |
| Sodium Nitrite | 0.04% | 0.015% | 0.04% | 0.015% |
| Sodium Erythorbate | 0.07% | 0.03% | 0.07% | 0.03% |
| Dextrose | 3.64% | 1.50% | 3.64% | 1.50% |
| SEF | 1.70% | 0.70% | 1.70% | 0.70% |
| Seasoning | 1.21% | 0.50% | 1.21% | 0.50% |
| Ice | 24.29% | 10.00% | 24.29% | 10.00% |
| Water | 63.71% | 18.39% | 63.71% | 26.24% |
| Total | 100.00% | 100.00% | 100.00% | 100.00% |

**Table 4 Formula used in the preparation of meat gels without a binder (Blank).**

| Composition | 50% Extension | | 70% Extension | |
|---|---|---|---|---|
| | % In Brine | % In Fin | % In Brine | % In Fin |
| Pork Legs, 3mm ground | | 66.67% | | 58.82% |
| STPP | 0.97% | 0.40% | 0.97% | 0.40% |
| NaCl | 4.37% | 1.80% | 4.37% | 1.80% |
| Sodium Nitrite | 0.04% | 0.015% | 0.04% | 0.015% |
| Sodium Erythorbate | 0.07% | 0.03% | 0.07% | 0.03% |
| Dextrose | 3.64% | 1.50% | 3.64% | 1.50% |
| SEF | 1.70% | 0.70% | 1.70% | 0.70% |
| Seasoning | 1.21% | 0.50% | 1.21% | 0.50% |
| Ice | 24.29% | 10.00% | 24.29% | 10.00% |
| Water | 63.71% | 18.39% | 63.71% | 26.24% |
| Total | 100.00% | 100.00% | 100.00% | 100.00% |

Similar to making a restructured ham above, the brine is prepared separately by mixing all liquid and dry ingredients using a mechanical mixer while the meat is comminuted to the desired size. The meat is then combined with the brine and mixed using a dough mixer with a flat paddle attachment. The mixing is carried out for 5 to 30 minutes preferably 10 to 20 minutes at medium low to medium speed enough to extract the meat proteins and interact with the added functional ingredients such as phosphates, salt and seaweed extract. The meat slurry is then stuffed into a fibrous casing with 50cm to 100cm, preferably 60cm to 80cm, stuffing diameter. The chubs are then pre-weighed then cooked at 80°C to 95°C, preferably 80°C to 85°C, to an internal temperature of 68°C to 75°C, preferably 70°C to 72°C. The chubs are then cooled down with a cold shower then reweighed for cook yield measurement. Once temperature reaches room temperature, the chubs are transferred into a chiller at 2°C to 10°C, preferably 2°C to 4°C, to completely set overnight. The next day, the chubs are sliced for hardness measurement using the SMS Texture Analyzer.

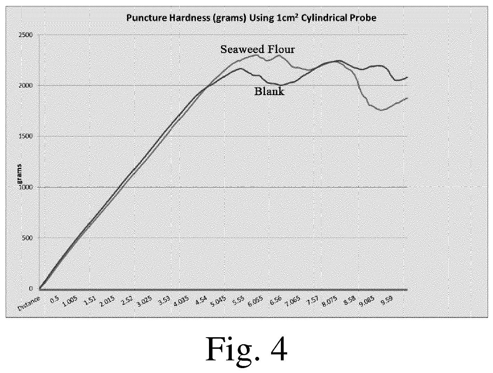

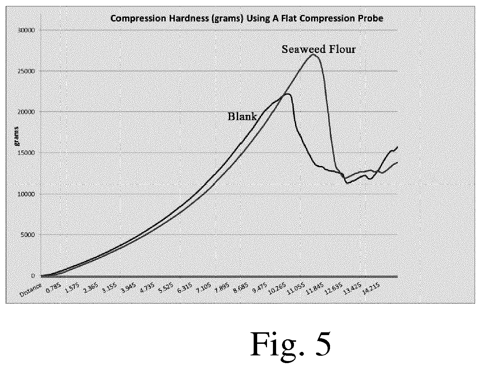

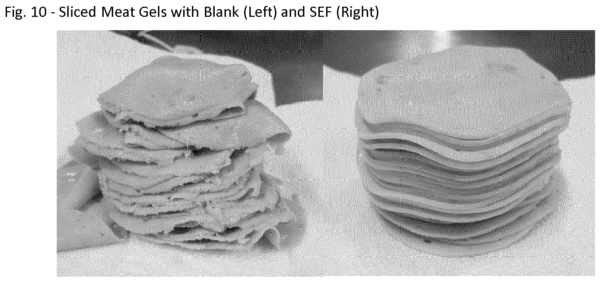

Fig. 4 is a graphical representation of puncture hardness of meat gels using 1 cm² cylindrical probe at 50% extension versus a blank. Fig. 5 is a graphical representation of puncture hardness of meat gels using 1 cm² cylindrical probe at 70% extension versus a blank. The data show better puncture resistance for the meat gel made with SEF over blank. The puncture hardness however is significantly higher than the ham since the meat gels are prepared with a finer comminuted meat, therefore extraction and interaction of meat proteins with the functional ingredients phosphates, salt, and SEF is optimized. Puncture hardness is correlated to sliceability and therefore the higher it is the better the meat gel's resistance to breaking down during slicing. Fig. 10 is a photograph which shows the appearance of good and poor sliceability between blank (left) and SEF (right).

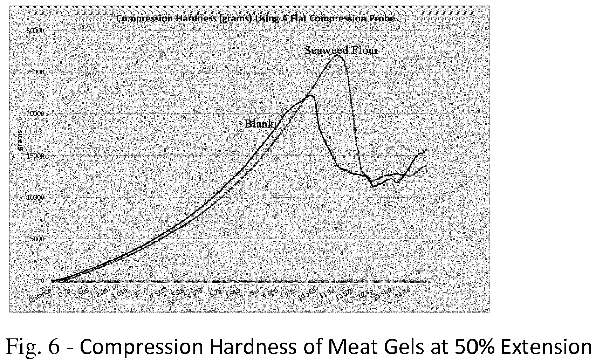

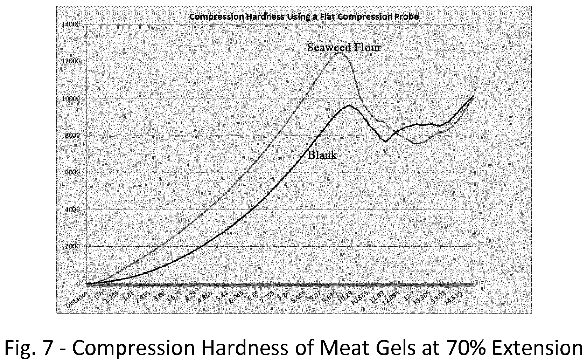

Fig. 6 and 7 are graphical representations of compression hardness of meat gels at 50% extension and 70% extension, respectively, relative to brittleness and elasticity. The measurement employs a flat probe that would compress the meat gel until it breaks. This data shows how elastic or brittle the meat gel is relative to hardness.

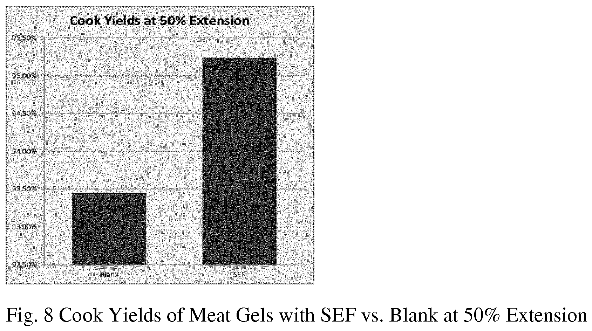

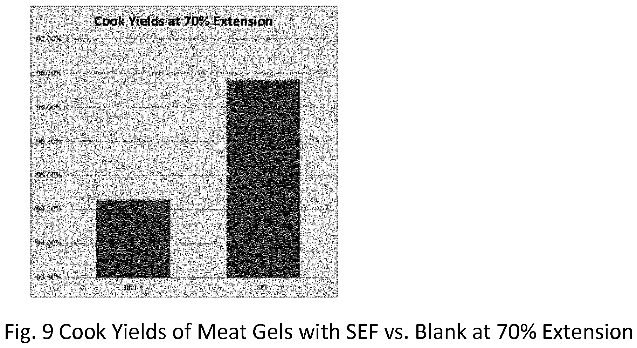

Figs. 8 and 9 show the cook yield enhancement at 50% and 70% extension, respectively, when SEF is added into the meat gel versus a blank. This data are a good indication of how effective the SEF is in reducing cooking loss of the meat gels. This observation can be translated into actual ham production since the composition of the meat gel is similar to actual ham.

The present invention, therefore, is well adapted to carry out the objectives and attain the ends and advantages mentioned, as well as others inherent therein.

## Claims

1. A method of preparing seaweed extract from Eucheuma seaweed comprising:
(a) washing or rinsing dried Eucheuma seaweed with water; and then
(b) soaking the Eucheuma seaweed with dilute alkaline-free potassium chloride salt solution at a concentration from 0.1 to 20 wt.% at 15°C to 30°C for 1 to 3 hours;
(c) chopping the soaked Eucheuma seaweed to reduce the size;
(d) sterilizing and deodorizing the resultant chopped Eucheuma seaweed for 30 to 45 minutes with a solution of sodium hypochlorite or hydrogen peroxide at a concentration of 50 to 300 ppm;
(e) washing the sterilized and deodorized Eucheuma seaweed with water, and recycling the wash water from step (e) for use in washing in step (a);
(f) drying the resultant washed Eucheuma seaweed using a mechanical dryer;
(g) grinding the resultant dried Eucheuma seaweed into an alkali-free powder;
(h) packaging the resultant alkali-free powder into bags.

2. The method of claim 1, wherein chopping step (c) is carried out with a high speed mechanical chopper or cutter and the reduced size is 2 to 4 cm.

3. The method of any of claims 1 or 2, wherein the Eucheuma seaweed is Eucheuma *Cottonii* or Eucheuma *Spinosum.*

4. The method of any of claims 1 to 3, wherein the dilute potassium chloride salt solution in step (b) is at a concentration of 1% to 10% by weight.

5. The method of any of claims 1 to 4, wherein the rinsing or washing step (a) is carried out in 20 to 30 minutes.

6. .The method of any of claims 1 to 5, wherein in step (f) the Eucheuma seaweed is dried to 12 to 15% moisture and the alkali-free powder of step (g) has a moisture content of 10% to 12%.

7. A method comprising:
A. grinding meat;
B. mixing alkali-free seaweed extract powder prepared according to any of claims 1 to 6 with one or more dry ingredients selected from the group consisting of STPP, NaCl, nitrite, erythorbate, dextrose, and seasoning, and dispersing into water to prepare brine;
C. combining the ground meat and the brine in a dough mixer to form a meat slurry;
D. stuffing the meat slurry into fibrous casings to form meat gel chubs;
E. weighing the meat gel chubs before cooking;
F. cooking the meat gel chubs in steam oven;
G. cooling the meat gel chubs with running water or shower;
H. reweighing the meat gel chubs to calculate cook yield;
I. storing the meat gel chubs in a chiller to set overnight; and
J. slicing the meat gel chubs and measuring puncture and compression hardness.

8. The method of claim 7, wherein the seaweed extract is pre-blended with the dry ingredients before dispersing the resultant blend into water to prepare the brine.

9. The method of claim 7 or 8, wherein the brine was mixed with a mechanical mixer for 5 minutes.

10. The method of any of claims 7 to 9, wherein the meat and brine are mixed using a dough mixer equipped with a diamond shape paddle carried out for 10 to 15 minutes at medium speed, wherein the meat slurry is stuffed into fibrous casings with 60 to 80mm stuffing diameter.

11. The method of any of claims 7 to 10, wherein the chubs are cooked at 80 to 85°C to an internal temperature of 70 to 72°C.

## Patentansprüche

1. Verfahren zur Herstellung von Meeresalgenextrakt aus Eucheuma-Algen, umfassend:
(a) Waschen oder Spülen von getrockneten Eucheuma-Algen mit Wasser; und dann
(b) Einweichen der Eucheuma-Algen für 1 bis 3 Stunden in verdünnter alkalifreier Kaliumchloridsalzlösung bei einer Konzentration von 0,1 bis 20 Gew% bei 15 °C bis 30 °C;
(c) Zerhacken der eingeweichten Eucheuma-Algen, um die Größe zu reduzieren;
(d) Sterilisieren und Deodorieren der resultierenden zerhackten Eucheuma-Algen für 30 bis 45 Minuten mit einer Lösung von Natriumhypochlorit oder Wasserstoffperoxid bei einer Konzentration von 50 bis 300 ppm;
(e) Waschen der sterilisierten und deodorierten Eucheuma-Algen mit Wasser und Rückführen des Waschwassers von Schritt (e) zur Verwendung beim Waschen in Schritt (a);
(f) Trocknen der resultierenden gewaschenen Eucheuma-Algen unter Verwendung eines mechanischen Trockners;
(g) Zermahlen der resultierenden getrockneten Eucheuma-Algen zu einem alkalifreien Pulver;
(h) Verpacken des resultierenden alkalifreien Pulvers in Beutel.

2. Verfahren nach Anspruch 1, wobei der Zerhackschritt (c) mit einem mechanischen Schnellzerhacker oder -schneider ausgeführt wird, und die reduzierte Größe 2 bis 4 cm beträgt.

3. Verfahren nach einem der Ansprüche 1 oder 2, wobei es sich bei den Eucheuma-Algen um Eucheuma *Cottonii* oder Eucheuma *Spinosum* handelt.

4. Verfahren nach einem der Ansprüche 1 bis 3, wobei die verdünnte Kaliumchloridsalzlösung in Schritt (b) eine Konzentration von 1 Gewichts% bis 10 Gewichts% aufweist.

5. Verfahren nach einem der Ansprüche 1 bis 4, wobei der Spül- oder Waschritt (a) in 20 bis 30 Minuten ausgeführt wird.

6. Verfahren nach einem der Ansprüche 1 bis 5, wobei in Schritt (f) die Eucheuma-Algen auf eine Feuchtigkeit von 12 bis 15 % getrocknet werden, und das alkalifreie Pulver von Schritt (g) einen Feuchtegehalt von 10 % bis 12 % aufweist.

7. Verfahren, umfassend:
A. Zerkleinern von Fleisch;
B. Mischen von alkalifreiem Pulver aus Meeresalgenextrakt, das nach einem der Ansprüche 1 bis 6 hergestellt ist, mit einer oder mehreren trockenen Zutaten, die aus der Gruppe bestehend aus STPP, NaCl, Nitrit, Erythorbat und Dextrose ausgewählt werden, und Würzen und Dispergieren in Wasser, um Lake herzustellen;
C. Kombinieren des zerkleinerten Fleisches und der Lake in einer Teigknetmaschine, um einen Fleischbrei zu bilden;
D. Füllen des Fleischbreis in faserige Hüllen, um Fleischgel-Chubs zu bilden;
E. Wägen der Fleischgel-Chubs vor dem Kochen;
F. Kochen der Fleischgel-Chubs in einem Dampfgarer;
G. Abkühlen der Fleischgel-Chubs unter laufendem Wasser oder Beregnung;
E. erneutes Wägen der Fleischgel-Chubs, um eine Kochausbeute zu berechnen;
I. Lagern der Fleischgel-Chubs in einem Kühler, um über Nacht zu härten; and
J. Schneiden der Fleischgel-Chubs in Scheiben und Messen der Stich- und Druckhärte.

8. Verfahren nach Anspruch 7, wobei der Meeresalgenextrakt vor dem Dispergieren der resultierenden Mischung in Wasser zum Herstellen der Lake mit den trockenen Zutaten vorgemischt wird.

9. Verfahren nach Anspruch 7 oder 8, wobei die Lake für 5 Minuten mit einem mechanischen Mischer gemischt wurde.

10. Verfahren nach einem der Ansprüche 7 bis 9, wobei das Fleisch und die Lake unter Verwendung einer Teigknetmaschine, die mit einer diamantförmigen Schaufel ausgestattet ist, gemischt werden, was für 10 bis 15 Minuten bei mittlerer Geschwindigkeit durchgeführt wird, wobei der Fleischbrei in faserige Hüllen mit einem Fülldurchmesser von 60 bis 80 mm gefüllt wird.

11. Verfahren nach einem der Ansprüche 7 bis 10, wobei die Chubs bei 80 bis 85 °C bis zu einer Innentemperatur von 70 bis 72 °C gekocht werden.

## Revendications

1. Procédé de préparation d'un extrait d'algue de l'algue Eucheuma, comprenant :
(a) le lavage ou le rinçage à l'eau de l'algue Eucheuma séchée ; et ensuite
(b) le trempage de l'algue Eucheuma avec une solution de sel chlorure de potassium sans alcali diluée à une concentration de 0,1 à 20 % en poids à une température de 15°C à 30°C pendant 1 à 3 heures ;
(c) le hachage de l'algue Eucheuma trempée pour réduire la taille ;
(d) la stérilisation et la désodorisation de l'algue Eucheuma hachée résultante pendant 30 à 45 minutes avec une solution d'hypochlorite de sodium ou de peroxyde d'hydrogène à une concentration de 50 à 300 ppm ;
(e) le lavage à l'eau de l'algue Eucheuma stérilisée et désodorisée, et le recyclage de l'eau de lavage de l'étape (e) pour une utilisation dans le lavage dans l'étape (a) ;
(f) le séchage de l'algue Eucheuma lavée résultante au moyen d'un séchoir mécanique ;
(g) le broyage de l'algue Eucheuma séchée résultante en une poudre sans alcali ;
(h) l'emballage dans des sacs de la poudre sans alcali résultante.

2. Procédé selon la revendication 1, dans lequel l'étape de hachage (c) est effectuée au moyen d'un hachoir ou d'une découpeuse mécanique à grande vitesse et la taille réduite est de 2 à 4 cm.

3. Procédé selon l'une quelconque des revendications 1 et 2, dans lequel l'algue Eucheuma est Eucheuma *Cottonii* ou Eucheuma *spinosum.*

4. Procédé selon l'une quelconque des revendications 1 à 3, dans lequel la solution de sel chlorure de potassium diluée dans l'étape (b) est à une concentration de 1 % à 10 % en poids.

5. Procédé selon l'une quelconque des revendications 1 à 4, dans lequel l'étape de rinçage ou de lavage (a) est effectuée en 20 à 30 minutes.

6. Procédé selon l'une quelconque des revendications 1 à 5, dans lequel, dans l'étape (f), l'algue Eucheuma est séchée à 12 à 15 % d'humidité et la poudre sans alcali de l'étape (g) a une teneur en humidité de 10 % à 12 %.

7. Procédé comprenant :
A. le hachage d'une viande ;
B. le mélange d'une poudre d'extrait d'algue sans alcali préparée conformément à l'une quelconque des revendications 1 à 6 avec un ou plusieurs ingrédients secs choisis dans le groupe constitué par le STPP, le NaCl, le nitrite, l'érythorbate, le dextrose, et un assaisonnement, et la dispersion dans de l'eau pour préparer une saumure ;
C. la combinaison de la viande hachée et de la saumure dans un pétrin pour former une bouillie de viande ;
D. le remplissage d'enceintes fibreuses avec la bouillie de viande pour former des morceaux de gel de viande ;
E. le pesage des morceaux de gel de viande avant cuisson ;
F. la cuisson des morceaux de gel de viande dans un four à vapeur ;
G. le refroidissement des morceaux de gel de viande avec de l'eau courante ou une douche ;
H. de nouveau le pesage des morceaux de gel de viande pour calculer le rendement de cuisson ;
I. le stockage des morceaux de gel de viande dans un congélateur pour qu'ils durcissent pendant la nuit ; et
J. le tranchage des morceaux de gel de viande et la mesure de la dureté aux piqûres et à la compression.

8. Procédé selon la revendication 7, dans lequel l'extrait d'algue est pré-mélangé avec les ingrédients secs avant dispersion du mélange résultant dans de l'eau pour préparer la saumure.

9. Procédé selon la revendication 7 ou 8, dans lequel la saumure a été mélangée avec un mélangeur mécanique pendant 5 minutes.

10. Procédé selon l'une quelconque des revendications 7 à 9, dans lequel la viande et la saumure sont mélangées au moyen d'un pétrin équipé d'une spatule en forme de losange pendant 10 à 15 minutes à vitesse moyenne, et dans lequel des enceintes fibreuses sont remplies de la bouillie de viande avec un diamètre de remplissage de 60 à 80 mm.

11. Procédé selon l'une quelconque des revendications 7 à 10, dans lequel les morceaux sont cuits à une température de 80 à 85°C jusqu'à une température interne de 70 à 72°C.
